# EUROPÄISCHE PATENTSCHRIFT

(11) **EP 0 613 708 B1**
(45) Veröffentlichungstag und Bekanntmachung des Hinweises auf die Patenterteilung: **02.07.1997**
(21) Anmeldenummer: 94101866.5
(22) Anmeldetag: 08.02.1994
(51) Int. Cl.: B01D 21/18

(54) **Vorrichtung zur Reinigung eines Beckens**
Device for cleaning a basin
Dispositif pour la purification d'un bassin

(30) Priorität: 13.02.1993 DE 4304375
(43) Veröffentlichungstag der Anmeldung: 07.09.1994
(73) Patentinhaber: Maschinenfabrik Hellmut Geiger GmbH & Co. KG., D-76185 Karlsruhe 21 (DE)
(72) Erfinder: Marzluf, Werner, D-76287 Rheinstetten-Mö. (DE)
(74) Vertreter: Pfeifer, Hans-Peter, Dr., Dr. H.-P. Pfeifer Dr. P. Jany, Patentanwälte

(56) Entgegenhaltungen:
- WO-A-93/14888
- DE-A- 3 715 021
- DE-A- 4 100 309
- PATENT ABSTRACTS OF JAPAN vol. 11, no. 259 (C-441) (2706) 21. August 1987 & JP-A-62 061 604 (TOSHIBA CORP) 18. März 1987
- PATENT ABSTRACTS OF JAPAN vol. 8, no. 199 (C-242) (1636) 12. September 1984 & JP-A-59 092 006 (MITSUBISHI DENKI K.K.) 28. Mai 1984

## Beschreibung

Die Erfindung betrifft eine Vorrichtung zur Reinigung eines Beckens, insbesondere zur Entfernung von Schlamm oder Sand, welche eine Reinigungseinheit zur Aufnahme der abzuscheidenden Stoffe und zur Weiterführung an eine Übergabestelle zur Entsorgung aufweist sowie mit einer Verfahreinheit, die mit einer Fahrsteuereinrichtung und einem Fahrantrieb zur Erzeugung einer Verfahrbewegung der Reinigungseinheit versehen ist.

Ein großes Anwendungsgebiet für derartige Vorrichtungen sind Absetz- oder Klärbecken von Kläranlagen. In solchen Becken findet eine Trennung zwischen abzuscheidenden Stoffen und einer Flüssigkeit statt. Dabei fallen in Abhängigkeit von der Menge der in der Flüssigkeit vorhandenen abzuscheidenden Stoffe mehr oder weniger große Mengen an Schlamm bzw. Sand auf der Beckensohle an. Mit Hilfe von geeigneten Werkzeugen wird die Beckensohle, im gefüllten Zustand des Beckens, von den angefallenen Stoffen gereinigt.

Bei einer vorbekannten Reinigungsvorrichtung nach DE-A-37 15 021 zur Benutzung im gefüllten Becken wird die Reinigung durch ein drehbares Räumschild vorgenommen, welches über die Beckensohle bewegt wird und wobei der zusammengeschobene Schlamm über Absaugleitungen in einen zentralen Schlammabzugskasten gelangt. Derartige Räumschilde sind mit ihrer Antriebseinheit fest in das Becken installiert und in ihren Abmessungen an Form und Größe des Beckens angepaßt. Der Reinigungsvorgang wird dabei entweder im Dauerbetrieb vorgenommen oder aber in vorgegebenen Zeitintervallen bzw. willkürlich wiederholt.

Daraus ergeben sich Nachteile vorbekannter Reinigungsvorrichtungen. Ein wesentlicher Nachteil besteht darin, daß die Reinigungsvorrichtung aufgrund der festen Installation und der Anpassung stets nur für ein Becken verwendet werden kann. Ebenfalls nachteilig ist die unzureichende Möglichkeit, den Reinigungsvorgang an die tatsächlich vorhandenen Verhältnisse, insbesondere bezüglich der Menge der angefallenen abzuscheidenden Stoffe anzupassen. Es ist somit häufig der Fall, daß die oftmals äußerst schweren Reinigungsvorrichtungen unter hohem Kostenaufwand wegen weniger Kilogramm Schlamm bewegt werden. Im umgekehrten Fall resultieren unzureichende Reinigungsergebnisse aus für die Menge der abzuscheidenden Stoffe zu großen Reinigungsintervallen, die dann durch die Reinigungsvorrichtung nicht mehr bewältigt werden können.

Bei der aus der JP-A-62 061 604 vorbekannten Reinigungsvorrichtung soll eine gute Wirksamkeit der Schlammräumung dadurch erzielt werden, daß die Räumgeschwindigkeit der Konzentration des Schlammes angepaßt wird. Hierzu ist das Führungselement eines Linearmotors am Bodenteil eines Absetzbeckens angebracht, wobei ein verfahrbares Räumgerät als bewegliches Element des Linearmotors ausgebildet ist. Die Konzentration des Schlamms wird mit einem an der Wasseroberfläche angeordneten Meßgerät überwacht, dessen Signale den Räumvorgang und die Räumgeschwindigkeit des bodenverfahrbaren Schlammräumers bestimmen.

Es handelt sich hier nur um eine reine Linearbewegung des Räumgerätes 6, welches nur in einer Richtung, nämlich bei Vorwärtsfahrt des zwischen zwei Endlagen des von Sonarsensoren gesteuerten Räum - gerätes 6, räumt.

Das Meßgerät zur Feststellung der Schlammkonzentration und damit zur Auflösung des Räumvorganges erfaßt die Schichtdicke bzw. Konzentration der Schlammschicht nur in einem definierten Bereich und kann somit auf unterschiedlichen Schlammanfall verteilt über die Bodenfläche des Absetzbeckens nicht hinreichend flexibel reagieren.

Der Erfindung liegt daher die Aufgabe zugrunde, eine auch unter Wasser arbeitende Vorrichtung zur Reinigung eines Beckens zur Verfügung zu stellen, die unter wechselnden Einsatzbedingungen, wie beispielsweise schwankender Menge der abzuscheidenden Stoffe oder für unterschiedliche Beckenformen, einen ökonomischen Verlauf des Reinigungsvorganges und gute Reinigungsergebnisse erzielt.

Die erfindungsgemäße Lösung der Aufgabe besteht darin, daß an der verfahrbaren Reinigungsvorrichtung mindestens ein erster Sensor zur Erkennung der Menge und/oder des Ortes der angefallenen zu entfernenden Stoffe vorgesehen ist, und daß eine Rechnereinheit vorhanden ist die Ausgangssignale des ersten Sensors als Führungsgröße zur Erzeugung von Rechnerausgangssignalen für die Fahrsteuereinrichtung zur flexiblen dem Ort oder dem Ort und der Menge der angefallenen Stoffe angepaßten Verfahrbewegung weiterverarbeitet, wodurch die Reinigungsvorrichtung mit Hilfe ihrer Verfahreinheit als selbstverfahrbare Baueinheit, je nach dem Ort der Anhäufung abzuscheidender Stoffe, in unterschiedliche Richtungen verfahrbar ist. Durch eine derartige Ausbildung einer Reinigungsvorrichtung ist gewährleistet, daß sich durch äußere Bedingungen ergebende variierende Reinigungsaufgaben durch eine einzige Reinigungsvorrichtung, unter Vermeidung der Nachteile der durch den Stand der Technik vorbekannten Reinigungsvorrichtungen, gelöst werden können. Als erster Sensor kann zweckmäßig ein optischer Sensor, beispielsweise ein Infrarotsensor, vorteilhaft in Mehrfachanordnung,verwendet werden. Je nach den gegebenen Verhältnissen und der Art der zu entfernenden Stoffe können jedoch auch andere Sensoren benutzt werden.

Zudem ist die erfindungsgemäße Reinigungsvorrichtung in der Lage, selbsttätig die sich ergebende Aufgabe zu erkennen und den Reinigungsvorgang einzuleiten. Es kann somit eine sehr weitgehende Automatisierung des Reinigungsvorganges bei gleichzeitig verbesserten Reinigungsergebnissen erreicht werden Die Reinigungsvorrichtung ist zweckmäßig untergetaucht bodenverfahrbar.

Durch eine bevorzugte Ausführungsform, bei der die Reinigungsvorrichtung mit Hilfe ihrer Verfahreinheit durch im Boden des Beckens integrierte Leitlinien steuerbar ist, läßt sich eine besonders einfache und kostengünstige Fahrsteuereinrichtung verwirklichen. Eine konstruktive Lösung kann dabei matrizenförmig, senkrecht und waagerecht zueinander ausgerichtete Leitlinien vorsehen, entlang denen die Reinigungsvorrichtung verfahrbar ist. Diese Leitlinien können bevorzugt Teile einer elektronischen Steuereinrichtung zur elektronischen Fahrwegsteuerung sein.

Bei einer zweckmäßigen Ausgestaltung weist die Reinigungseinheit mindestens ein Schlammräumwerkzeug auf. Üblicherweise ist das Schlammräumwerkzeug ein Räumschild, mit dem der Schlamm zu einer Übergabestelle in eine Fördereinrichtung geschoben wird.

Bei einer weiteren bevorzugten Ausführungsform besitzt die Rechnereinheit künstliche Intelligenz, wodurch sie bei gleichen Ausgangssituationen unterschiedliche Steuersignale zur Optimierung des Reinigungsvorganges an die Fahrsteuereinrichtung ausgeben kann. Es handelt sich hierbei um eine "lernfähige" Rechnereinheit, die beispielsweise mit einem Expertensystem versehen ist, das nach heuristischen Methoden bestrebt ist, für jeden Anwendungsfall eine optimale Reinigungsstrategie zu entwickeln. Vorhergehende Reinigungsvorgänge dienen dabei als Erfahrenswerte und werden zusammen mit entsprechenden Regeln zur Ausarbeitung der jeweiligen Reinigungsstrategie benutzt. Es besteht somit die Möglichkeit, auch auf Besonderheiten und Belastungen zu reagieren, bei denen ein normales Steuerungsprogramm derartiger Vorrichtungen überfordert ist.

Die Erfindung wird im folgenden anhand von in den Figuren schematisch dargestellten Ausführungsbeispielen näher erläutert, aus denen sich weitere Erfindungsmerkmale ergeben; es zeigen:
- Fig. 1: eine Draufsicht auf eine Reinigungsvorrichtung,
- Fig. 2: eine Seitenansicht der Reinigungsvorrichtung nach Fig. 1,
- Fig. 3: eine Vorderansicht der in den Figuren 1 und 2 dargestellten Reinigungsvorrichtung,
- Fig. 4: eine Draufsicht auf die sich in einem Becken befindende Reinigungsvorrichtung nach Fig. 1 bis 3,
- Fig. 5: eine alternative Ausbildung der Reinigungsvorrichtung nach Fig. 1 bis 3 mit seitlichem Abwurf,
- Fig. 6: eine Reinigungsvorrichtung nach Fig. 1 bis 3 in Verbindung mit einer Rohrbrücke

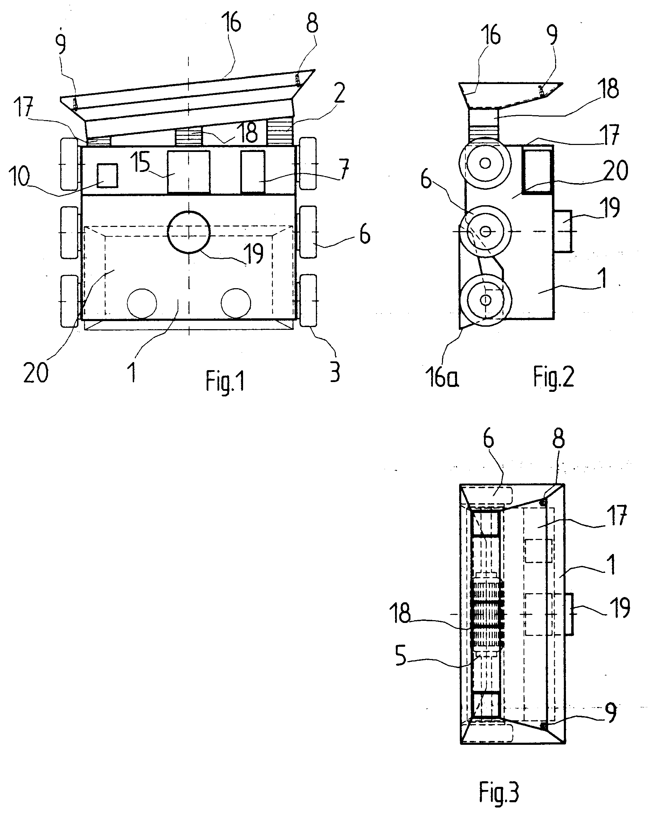

Die in den Figuren 1 bis 3 dargestellte Reinigungsvorrichtung 1 weist eine Reinigungseinheit 2 sowie eine Verfahreinheit 3 auf, die gemeinsam eine auf einem Bodenteil,vorzugsweise einem Beckenboden selbstverfahrbare kompakte Baueinheit bilden.

Die Verfahreinheit 3 enthält einen Fahrantrieb 5 zur Erzeugung der Verfahrbewegung durch als Laufräder 6 oder Raupenketten ausgebildete Verfahrelemente und ferner eine Fahrsteuereinrichtung 7.

Die Reinigungsvorrichtung 1 ist zur Erkennung der Menge und des Ortes der angefallenen zu entfernenden Stoffe mit einem ersten Typ eines Sensors 8 (erster Sensor) versehen. Dieser erste Sensor ist zweckmäßig als optischer Sensor,beispielsweise als Infrarotsensor, ausgebildet. Ein zweiter Typ von Sensor 9 (zweiter Sensor) dient zur Feststellung der Konsistenz der zu entfernenden Stoffe. Dieser zweite Sensor kann beispielsweise zweckmäßig als akustischer Sensor, insbesondere als Schallreflexsensor nach dem Echolotprinzip ausgebildet sein. Grundsätzlich sind jedoch auch andere Sensoren möglich und gegebenenfalls zweckmäßig.

Beide Sensoren sind mit dem Eingang einer Rechnereinheit 10 verbunden. Der Ausgang der Rechnereinheit 10 steuert den Fahrantrieb 5 unter Zwischenschaltung eines in der Zeichnung nicht dargestellten Signalverstärkers über die Fahrsteuereinrichtung 7. In einem Speicher der Recheneinheit 10 ist ein lernfähiges Expertensystem vorhanden.

Die Reinigungseinheit 2 weist ein Schlammräumschild 16 auf, das sich an der Frontseite 17 der Reinigungsvorrichtung 1 befindet. An der Rückseite der Reinigungsvorrichtung 1 ist ein weiteres Schlammräumwerkzeug 16a vorgesehen, so daß die Reinigungsvorrichtung 1 in zwei Fahrtrichtungen räumen kann.

Die Aufnahmeausnehmung des Schlammräumschildes 16 ist durch einen Schlauch 18 mit der Schlammabsaugvorrichtung 15 verbunden, und diese fördert den abgesaugten Schlamm vom Schlammräumschild 16 bzw. Räumwerkzeug 16a zu einem Anschlußadapter 19 der Reinigungsvorrichtung 1, an den ein weiterer Schlauch oder ein sonstiges Verbindungselement zur Weiterführung des Schlamms an eine Übergabestelle zur Entsorgung anschließbar ist.

In bestimmten Anwendungsfällen kann die Reinigungsvorrichtung 1 vorteilhaft mit einem Schlammzwischenspeicher versehen sein, welcher zweckmäßig zusätzlich so ausgebildet sein kann, daß die Abgabe des Schlamms nur an einer bestimmten Übergabestelle im Fahrweg der Reinigungsvorrichtung bevorzugt am Fahrwegende erfolgt.

Die wasserempfindlichen Teile der Reinigungsvorrichtung 1 sind in einem wasserdichten Gehäuse 20 eingeschlossen, so daß die Reinigungsvorrichtung 1 ohne Gefahr für diese Teile voll tauchfähig ist.

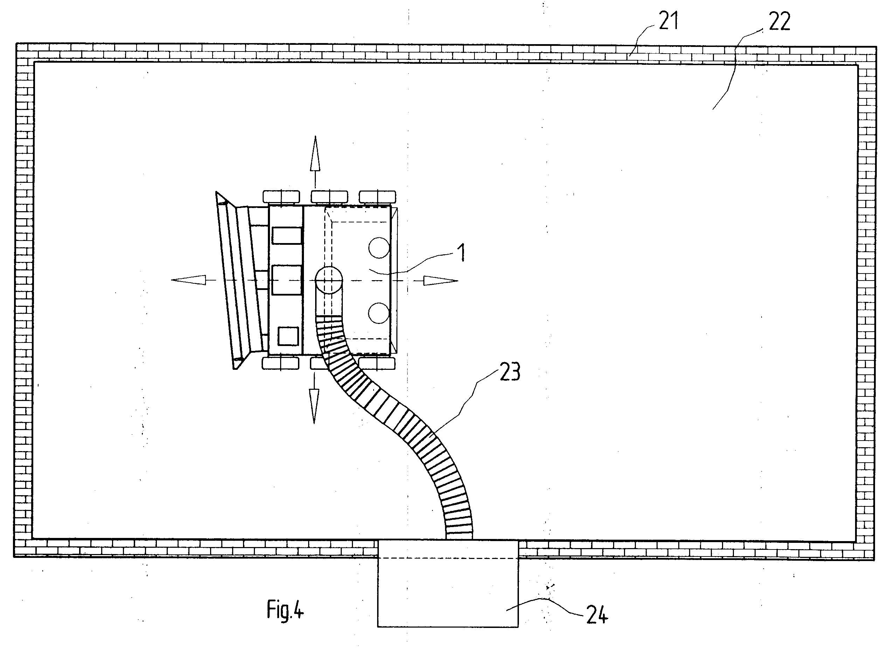

In Fig. 4 befindet sich die Reinigungsvorrichtung 1 auf der Beckensohle 22 in einem mit Wasser gefüllten Absetzbecken, in Form eines Längsbeckens 21. Dabei ist der Anschlußadapter 19 der Reinigungseinheit 2 zum Weitertransport von Schlamm durch einen flexiblen Schlauch 23 mit einer zentralen Übergabestelle 24 verbunden.

Hat sich auf der Beckensohle 22 des Längsbeckens 21 Schlamm angesammelt, der nach Menge, Konsistenz, örtlicher Häufung oder nach anderen Parametern eine Reinigung der Beckensohle 22 notwendig macht, so wird dies von den Sensoren 8,9 selbsttätig erkannt und der Reinigungsvorgang eingeleitet. Die entsprechenden Ausgangssignale der Sensoren 8,9 gelangen als Führungsgrößen in die Rechnereinheit 10. Dort werden sie von dem Expertensystem zur Erzeugung von Rechnerausgangssignalen verwendet. Die an die Fahrsteuereinrichtung 7 zur Steuerung des Fahrantriebs 5 weitergeleiteten Rechnerausgangssignale werden vor allem unter dem Gesichtspunkt einer möglichst wirtschaftlichen Verfahrbewegung der Reinigungsvorrichtung 1 erzeugt. Das bedeutet im wesentlichen, daß die Verfahrwege und die Einsatzdauer möglichst kurz sein sollen. Dabei kann die Verfahrbewegung der Reinigungsvorrichtung 1 jede Richtung auf der Beckensohle 22 annehmen und die Geschwindigkeit der Verfahrbewegung läßt sich der örtlichen Häufung des Schlamms anpassen. Eine weitere bei dieser Ausführungsform nicht dargestellte Möglichkeit, auf unterschiedliche Mengen von abzusaugendem Schlamm zu reagieren, besteht in einer vorteilhaften Anpassung der Leistung der Absaugvorrichtung, die ebenfalls durch entsprechende Signale von der Rechnereinheit 10 gesteuert werden kann. Gegebenenfalls können in einer konstruktiven Lösung zur Bewältigung der örtlich unterschiedlichen Mengen an abzuscheidendem Schlamm beide Möglichkeiten kombiniert verwirklicht werden.

Wie aus Fig. 4 erkennbar ist, sind die Abmessungen der kompakten selbstverfahrbaren Reinigungsvorrichtung 1 bei weitem kleiner als die des Absetzbeckens 21. Da bei den Abmessungen der Reinigungsvorrichtung 1 keine Anpassung an die Beckenabmessungen erforderlich ist, ergibt sich der wesentliche Vorteil, daß die Reinigungsvorrichtung 1 nacheinander in mehreren auch unterschiedlichen Becken eingesetzt werden kann. So ist es beispielsweise ohne weiteres möglich, die Reinigungsvorrichtung 1 auch für ein Rundbecken oder für andere Beckenformen zu verwenden. Für das Entnehmen und das Einsetzen der Reinigungsvorrichtung 1 in verschiedene Becken kann beispielsweise ein mobiler Kran verwendet werden. In der Praxis hat es sich gezeigt, daß es eine Vielzahl von Anwendungsfällen gibt, in denen die Reinigungsintervalle für die einzelnen Becken groß genug sind, um eine einzige Reinigungsvorrichtung nacheinander in mehreren Becken zu verwenden. Dies hat für die Betreiber derartiger Anlagen große wirtschaftliche Bedeutung, da sie nunmehr nicht für jedes Becken eine eigene Reinigungsvorrichtung beschaffen und installieren müssen.

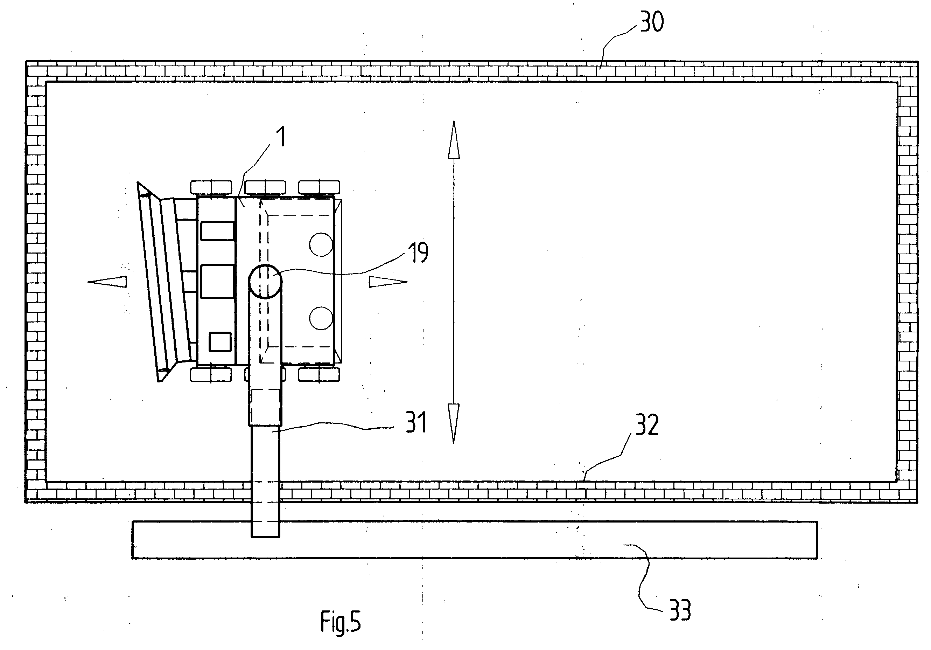

Bei der Darstellung nach Fig. 5 wird ebenfalls die Reinigungsvorrichtung nach der in Fig. 1 dargestellten Ausführung benutzt. Hierbei ist am Anschlußadapter 19 ein teleskopartig in seiner Länge verstellbares Rohr 31 mit zugehörigem Verstellantrieb einseitig angeschlossen. Die Länge des verstellbaren Rohres 31 ist dabei so einzurichten, daß sich die Auslaßseite des Rohres 31 unabhängig von der Bewegung der Reinigungsvorrichtung 1 im Becken über einer entlang der Längskante 32 des Längsbeckens 30 parallel verlaufenden Übergabestelle in einer Rinne 33 befindet. In einer einfachen Ausbildung kann auf ein Verstellantrieb des Übergaberohres gegebenenfalls verzichtet werden, wenn die Auslaßseite des Rohres 31 eine mechanische Zwangsführung aufweist, welche dafür sorgt, daß die Rohrmündung stets über der Rinne 33 liegt.

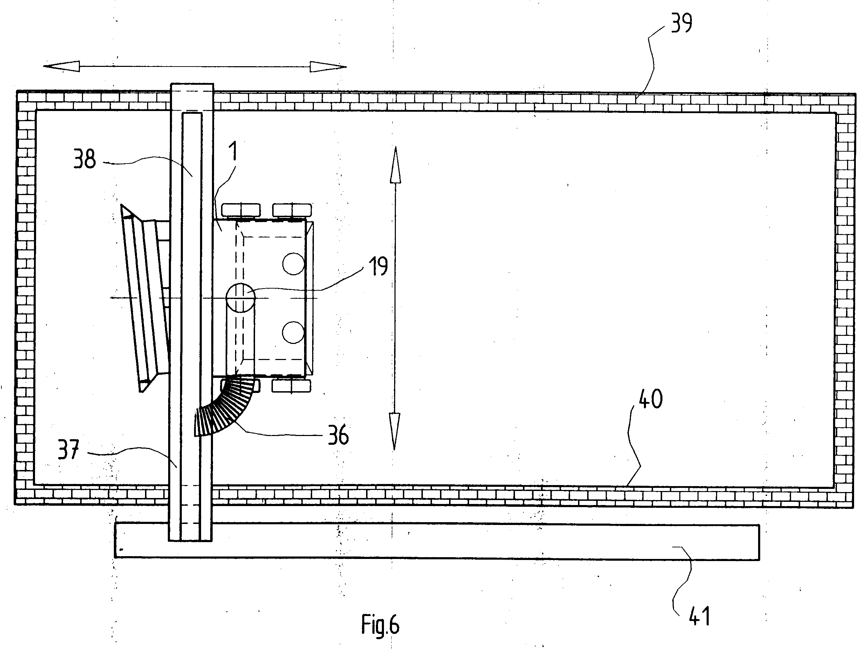

Bei der konstruktiven Lösung nach Fig. 6 ist die Reinigungsvorrichtung 1 längs einer Rohrbrücke 37 quer zur Beckenlängsrichtung verfahrbar. Die Längsbewegung wird der Reinigungsvorrichtung 1 durch die in Beckenlängsrichtung verfahrbare Rohrbrücke 37 übertragen.

Die Rohrbrücke 37 ist auf in der Zeichnung nicht dargestellten Schienenführungen parallel zu den oberen Längskanten 40 des Längsbeckens 39 verfahrbar. Der Anschlußadapter 19 der Reinigungsvorrichtung 1 ist über einen Verbindungsschlauch 36 an die Rohrbrücke 37 angeschlossen. Dabei werden die abzuscheidenden Stoffe über den Schlauch 36 in den freien Innenraum des Rohres 38 oder einer entsprechenden Rinne auf der Rohrbrücke 37 abgegeben. Von dort gelangen sie analog der Ausbildung nach Fig. 5 in eine entlang der oberen Längskante 40 parallel verlaufende Rinne 41. Für bestimmte Anwendungsfälle ist auch die Anwendung von zwei Rinnen 41 möglich, welche jeweils parallel beidseitig zu den oberen Längskanten 40 des Längsbeckens 39 angeordnet sind. Die Steuerung der Fahrbewegung der Rohrbrücke 37 kann dabei ebenfalls von der Rechnereinheit 10 vorgenommen werden. Da die Rohrbrücke 37 zweckmäßig zusätzlich zur Erzeugung der Längsverfahrbewegung der Reinigungsvorrichtung 1 verwendet wird, muß die Verfahreinheit 3 der Reinigungsvorrichtung 1 lediglich entsprechende Querbewegungen zur Längsrichtung des Beckens 39 erzeugen.

Die erfindungsgemäße Reinigungsvorrichtung nach Fig. 6 unterscheidet sich somit in ihrer Verbindung mit der Abgabestelle von den vorher beschriebenen Ausführungsformen. Alle übrigen Merkmale der in Fig. 1 bis 3 dargestellten Baueinheit, insbesondere bezüglich der Sensoren und der Rechnereinheit und der sich daraus ergebenden Möglichkeiten, sind auch in dieser erfindungsgemäßen Ausgestaltung verwirklicht.

Bei einer anderen zweckmäßigen Ausbildung können ferner mehrere Reinigungsvorrichtungen 1 in einem Becken benutzt werden.

## Patentansprüche

1. Vorrichtung zur Reinigung eines Beckens, insbesondere zur Entfernung von Schlamm oder Sand, mit einer verfahrbaren Reinigungsvorrichtung (1) zur Aufnahme der abzuscheidenden Stoffe und zur Weiterführung an eine Übergabestelle zur Entsorgung, wobei diese Reinigungsvorrichtung (1) eine Reinigungseinheit (2) und eine Verfahreinheit (3) aufweist, die mit einer Fahrsteuereinrichtung (7) und einem Fahrantrieb (5) zur Erzeugung der Verfahrbewegung auf dem Beckenboden versehen ist, wobei mindestens ein Sensor zur Erkennung der angefallenen abzuscheidenden Stoffe vorhanden ist, wodurch eine Steuereinheit die Verfahrbewegung in Abhängigkeit von dem Anfall der abzuscheidenden Stoffe aus löst und steuert, **dadurch gekennzeichnet,** daß an der verfahrbaren Reinigungsvorrichtung (1) mindestens ein erster Sensor (8) zur Erkennung des Ortes oder des Ortes und der Menge der angefallenen abzuscheidenden Stoffe vorgesehen ist, und daß eine Rechnereinheit (10) Ausgangssignale des ersten Sensors (8) als Führungsgröße zur Erzeugung von Rechnerausgangssignalen für die Fahrsteuereinrichtung (7) zur flexiblen dem Ort oder dem Ort und der Menge der angefallenen Stoffe angepaßten Verfahrbewegung weiterverarbeitet, wodurch die Reinigungsvorrichtung (1) mit Hilfe ihrer Verfahreinheit (3) als selbstverfahrbare Baueinheit, je nach dem Ort der Anhäufung abzuscheidender Stoffe, in unterschiedliche Richtungen verfahrbar ist.

2. Vorrichtung nach Anspruch 1, **dadurch gekennzeichnet,** daß die Rechnereinheit (10) künstliche Intelligenz aufweist, wodurch sie bei gleichen Ausgangssituationen unterschiedliche Steuersignale zur Optimierung der Verfahrbewegung der Reinigungsvorrichtung (1) an die Fahrsteuereinrichtung (7) ausgibt.

3. Vorrichtung nach Anspruch 1 oder 2, **dadurch gekennzeichnet,** daß ein zweiter Sensor (9) zur Feststellung der Konsistenz der zu entfernenden Stoffe vorgesehen und mit der Rechnereinheit (10) verbunden ist.

4. Vorrichtung nach Anspruch 1, **dadurch gekennzeichnet,** daß die Fahrbewegung der Reinigungsvorrichtung (1) durch im Becken integrierte Leitlinien steuerbar ist.

5. Vorrichtung nach Anspruch 4, **dadurch gekennzeichnet,** daß diese Leitlinien matrizenförmig senkrecht und waagerecht zueinander ausgerichtet sind.

6. Vorrichtung nach Anspruch 1, **dadurch gekennzeichnet,** daß zur Aufnahme der abzuscheidenden Stoffe eine Absaugvorrichtung vorgesehen ist, deren Saugleistung durch die Rechnereinheit (10) an die unterschiedlichen Mengen der abzuscheidenden Stoffe anpaßbar ist.

7. Vorrichtung nach Anspruch 1, **dadurch gekennzeichnet,** daß die Reinigungsvorrichtung (1) zur Weiterführung der abzuscheidenden Stoffe durch einen Schlauch (23) mit einer zentralen Übergabestelle (24) verbunden ist.

8. Vorrichtung nach Anspruch 1, **dadurch gekennzeichnet,** daß zur Abgabe der von der Reinigungsvorrichtung (1) aufgenommenen Stoffe eine verfahrbare Rohrbrücke (37) vorgesehen ist, mit deren Hilfe die abzugebenden Stoffe in eine wenigstens einseitig am Beckenrand angeordnete Rinne (33) abgegeben werden.

9. Vorrichtung nach Anspruch 1, **dadurch gekennzeichnet**, daß die Reinigunsvorrichtung (1) mit einem längenveränderbaren Rohr (31) oberhalb einer parallel zum Beckenrand angeordneten Rinne in Verbindung steht.

10. Vorrichtung nach Anpspruch 5 oder 6, **dadurch gekennzeichnet,** daß die Reinigungsvorrichtung (1) mindestens zwei in verschiedenen Fahrtrichtungen wirksame Schlammräumwerkzeuge (16, 16a) bzw. Schlammabsaugvorrichtungen aufweist.

11. Vorrichtung nach Anspruch 1, **dadurch gekennzeichnet,** daß die Reinigungsvorrichtung (1) einen Zwischenspeicher für die abzuscheidenden Stoffe enthält.

12. Vorrichtung nach Anspruch 11, **dadurch gekennzeichnet,** daß die Abgabe der abzuscheidenden Stoffe aus dem Zwischenspeicher an einer definierten Übergabestelle abhängig vom Fahrweg der Reinigungsvorrichtung (1) erfolgt.

13. Vorrichtung nach Anspruch 10, **dadurch gekennzeichnet,** daß die verfahrbare Reinigungsvorrichtung (1) mit mindestens einem auf dem Beckenboden wirksamen Räumschild (16, 16a) versehen ist, und daß an der Übergabestelle im Beckenboden mindestens ein Aufnahmetrichter vorgesehen ist.

14. Vorrichtung nach Anspruch 1, **dadurch gekennzeichnet,** daß an einer im Becken untergetauchten Querbrücke mindestens zwei sensorgesteuerte Reinigungsvorrichtungen (1) derart bewegbar angeordnet sind, daß von jeder Reinigungsvorrichtung (1) jeweils ein zugeordneter Reinigungsbereich überstrichen wird.

## Claims

1. Device for cleaning a basin, in particular for removing sludge or sand, having a transportable cleaning device (1) for receiving the substances to be separated off and for carrying them onward to a transfer point for disposal, wherein the said cleaning device (1) has a cleaning unit (2) and a transporting unit (3) which is provided with a travel control arrangement (7) and a travel drive (5) for producing the transporting movement on the floor of the basin, and wherein at least one sensor is present for identifying the accumulated materials to be separated off, as a result of which a control unit triggers and controls the transporting movement in dependence upon the accumulation of the substances to be separated off, **characterised in that** at least one first sensor (8) for identifying the location, or the location and quantity, of the accumulated substances to be separated off is provided on the transportable cleaning device (1), and that a computer unit (10) further processes output signals from the first sensor (8) as a guide quantity for producing computer output signals for the travel control arrangement (7) for flexible transporting movement adapted to the location, or to the location and quantity, of the accumulated substances, as a result of which the cleaning device (1) can be transported, with the aid of its transporting unit (3), in different directions as an automatically transportable structural unit, according to the location of the aggregation of substances to be separated off.

2. Device according to claim 1, **characterised in that** the computer unit (10) has artificial intelligence, as a result of which it emits to the travel control unit (7), in the case of identical starting situations, different control signals for optimising the transporting movement of the cleaning device (1).

3. Device according to claim 1 or 2, **characterised in that** a second sensor (9) is provided for establishing the consistency of the substances to be removed, and is connected to the computer unit (10).

4. Device according to claim 1, **characterised in that** the travel movement of the cleaning device (1) can be controlled by guide lines integrated into the basin.

5. Device according to claim 4, **characterised in that** the said guide lines are orientated vertically and horizontally in relation to one another, in the form of a matrix.

6. Device according to claim 1, **characterised in that** there is provided, for receiving the substances to be separated off, an extracting device, the suction power of which can be adapted, by the computer unit (10), to the differing quantities of the substances to be separated off.

7. Device according to claim 1, **characterised in that** the cleaning device (1) is connected, for carrying the substances to be separated off onwards through a hose (23), to a central transfer point (24).

8. Device according to claim 1, **characterised in that** there is provided, for delivering the substances received by the cleaning device (1), a transportable tubular bridge (37), with the aid of which the substances to be delivered are delivered into a channel (33) disposed at the edge of the basin on at least one side.

9. Device according to claim 1, **characterised in that** the cleaning device (1) is in communication with a tube (31) of variable length above a channel disposed parallel to the edge of the basin.

10. Device according to claim 5 or 6, **characterised in that** the cleaning device (1) has at least two sludge-clearing tools (16, 16a) or sludge-extracting devices which operate in different directions of travel.

11. Device according to claim 1, **characterised in that** the cleaning device (1) contains an intermediate reservoir for the substances to be separated off.

12. Device according to claim 11, **characterised in that** the delivery, from the intermediate reservoir to a defined transfer point, of the substances to be separated off takes place in dependence upon the path of travel of the cleaning device (1).

13. Device according to claim 10, **characterised in that** the transportable cleaning device (1) is provided with at least one clearing plate (16, 16a) which operates on the floor of the basin, and that at least one receiving funnel is provided at the transfer point in the floor of the basin.

14. Device according to claim 1, **characterised in that** at least two sensor-controlled cleaning devices (1) are movably disposed on a transverse bridge submerged in the basin, in such a way that an assigned cleaning area, in each case, is swept by each cleaning device (1).

## Revendications

1. Dispositif pour la purification d'un bassin, en particulier pour enlever de la vase ou du sable, avec un dispositif de purification mobile (1) pour enlever les substances à retirer et pour les conduire à un point de déversement afin d'y être évacuées, dans lequel ce dispositif de purification (1) présente une unité de purification (2) et une unité mobile (3) qui est muni d'un dispositif de pilotage (7) et un organe moteur (5) pour produire le mouvement de déplacement sur le fond du bassin, dans lequel au moins un capteur est disposé pour déceler les substances à retirer qui s'accumulent, au moyen duquel une unité de commande déclenche et commande le mouvement de déplacement en fonction de l'accumulation des substances a retirer, caractérisé en ce qu'au moins un premier capteur (8) est prévu au niveau du dispositif de purification mobile pour détecter le lieu ou le lieu et la quantité des substances à retirer qui s'accumulent et qu'une unité d'ordinateur (10) transforme les signaux de sortie du premier capteur (8) en grandeur de commande pour appliquer des signaux de sortie d'ordinateur au dispositif de pilotage pour le déplacement mobile versatile adapté au lieu ou au lieu et à la quantité de substances accumulées, au moyen duquel le dispositif de purification (1), grâce à son unité mobile (3), en tant qu'élément modulaire, est mobile dans différentes directions selon le lieu d'amoncellement de substances accumulées.

2. Dispositif selon la revendication 1, caractérisé en ce que l'unité d'ordinateur (10) est dotée d'une intelligence artificielle, grâce à laquelle dans des situations de départ identiques elle applique des signaux différents au dispositif de pilotage (7) pour optimiser le déplacement mobile du dispositif de purification (1).

3. Dispositif selon les revendications 1 ou 2, caractérisé en ce qu'un deuxième capteur (9) est prévu pour constater la consistence des substances et qu'il est relié à l'unité d'ordinateur (10).

4. Dispositif selon la revendication 1, caractérisé en ce que le mouvement du dispositif de purification (1) est pilotable au moyen de lignes de guidage intégrées au bassin.

5. Dispositif selon la revendication 4, caractérisé en ce que ces lignes de guidage sont disposées verticalement et horizontalement sous forme de matrice.

6. Dispositif selon la revendication 1, caractérisé en ce qu'un dispositif aspirateur est prévu pour enlever les substances à retirer dont la puissance d'aspiration est adaptable, grâce au moyen de l'unité d'ordinateur, aux diverses quantités de substances à retirer.

7. Dispositif selon la revendication 1, caractérisé en ce que le dispositif de purification (1) est raccordé à un point de déversement central (24) par un tuyau (23) pour entraîner les substances à retirer.

8. Dispositif selon la revendication 1, caractérisé en ce qu'il est prévu un pont pour tuyauterie (37) pour évacuer les substances recueillies par le dispositif de purification (1), grâce auquel les substances à évacuer sont déversées dans une rigole (33) disposée au moins sur un côté au bord du bassin.

9. Dispositif selon la revendication 1, caractérisé en ce que le dispositif de purification (1) est raccordé à un tube (31) de longueur variable au-dessus d'une rigole disposée parallèlement au bord du bassin.

10. Dispositif selon la revendication 5 ou 6, caractérisé en ce que le dispositif de purification (1) présente au moins deux outils de débourbage (16, 16a), ou bien des dispositifs aspirant la boue, agissant dans différentes directions de marche.

11. Dispositif selon la revendication 1, caractérisé en ce que le dispositif de purification (1) comporte un réservoir intermédiaire pour les substances à retirer.

12. Dispositif selon la revendication 11, caractérisé en ce que l'évacuation des substances à retirer du réservoir intermédiaire vers un point de déversement défini s'effectue en fonction du chemin parcouru par le dispositif de purification (1).

13. Dispositif selon la revendication 10, caractérisé en ce que le dispositif de purification (1) mobile est muni d'au moins une lame racleuse (16, 16a) agissant sur le fond du bassin, et qu'au niveau du point de versement il est prévu une trémie de réception au fond du bassin.

14. Dispositif selon la revendication 1, caractérisé en ce qu'au niveau d'un pont transversal immergé dans le bassin, au moins deux dispositifs de purification (1) commandés par des capteurs sont disposés de sorte que chaque dispositif de purification (1) recouvre un domaine de purification qui lui est attribué respectivement.
